# EUROPÄISCHE PATENTSCHRIFT

(11) **EP 2 624 089 B1**
(45) Veröffentlichungstag und Bekanntmachung des Hinweises auf die Patenterteilung: **28.02.2018**
(21) Anmeldenummer: 12191227.3
(22) Anmeldetag: 05.11.2012
(51) Int. Cl.: G05B 19/404, G05B 19/19

(54) **Reglerstruktur zur Dämpfung niederfrequenter Schwingungen**
Controller structure for damping low-frequency vibrations
Structure de réglage pour l'amortissement de vibrations à basse fréquence

(30) Priorität: 02.02.2012 DE 102012201562
(43) Veröffentlichungstag der Anmeldung: 07.08.2013
(73) Patentinhaber: Dr. Johannes Heidenhain GmbH, 83301 Traunreut (DE)
(72) Erfinder: Kerner, Norbert, 83374 Traunwalchen (DE)

(56) Entgegenhaltungen:
- EP-B1- 1 439 437
- US-B1- 6 515 442

## Beschreibung

Die Erfindung betrifft eine Reglerstruktur zur Dämpfung niederfrequenter Schwingungen an numerisch gesteuerten Werkzeugmaschinen nach dem Oberbegriff des Anspruches 1. Solche Schwingungen beeinflussen die Oberflächenqualität eines bearbeiteten Werkstückes erheblich.

Die Numerische Steuerung einer Werkzeugmaschine kontrolliert die Bearbeitung eines Werkstückes anhand eines Teileprogramms, in dem in verschiedensten Bearbeitungszyklen ein Bearbeitungsvorgang festgelegt ist. Ein Werkzeug muss dabei möglichst genau einer vorgegebenen Bahn folgen, so dass die Form des fertigen Werkstücks den Vorgaben entspricht. Hierzu müssen die verschiedenen Achsen der Werkzeugmaschine mit ihren jeweiligen rotatorischen oder linearen Antrieben entsprechend angesteuert werden.

Um eine vorgegebene Bearbeitungsbahn einhalten zu können, finden Reglerstrukturen Anwendung, die in einem Lageregler aus der jeweils vorgegebenen Sollposition und der tatsächlichen Position einer Maschinenachse eine Sollgeschwindigkeit (für Linearantriebe) bzw.

Solldrehzahl (für rotatorische Antriebe) berechnen, mit der dann ggf. eine Positionsabweichung korrigiert werden soll. Die Differenz zwischen der Solldrehzahl und der tatsächlichen Drehzahl wird in einem Drehzahlregler in einen Sollstrom umgesetzt, der - multipliziert mit der Motorkonstanten des Antriebs - auch einem Solldrehmoment des Antriebs entspricht. In einem Stromregler wird aus diesem Sollstrom nach Vergleich mit dem tatsächlichen Strom eine Sollspannung erregelt, die im Antriebsverstärker umgesetzt und an die Phasen des Motors angelegt wird. Geeignete Messsysteme überprüfen die tatsächliche Lage der jeweiligen Antriebe, von der jeweils die tatsächliche Geschwindigkeit abgeleitet werden kann. Stromsensoren in den Zuleitungen zum Motor erfassen den tatsächlichen Strom.

Die Verbindung zwischen Antrieb und Werkzeug ist nie völlig starr, sondern enthält vielmehr elastische, also schwingungsfähige Komponenten. Es treten daher mechanische Resonanzen auf, die bei ungünstiger Parametrierung der Reglerstruktur und/oder geringer Eigendämpfung der elastischen Komponenten zu unerwünschten Schwingungen führen können. Durch die Forderung nach immer höherer Bandbreite der Reglerstrukturen, realisiert vor allem durch hohe Verstärkungsfaktoren im Lageregelkreis, werden auch solche niederfrequenten Resonanzfrequenzen verstärkt und überlagern die Werkzeugbahn. Niederfrequente Schwingungen im Bereich bis etwa 50 Hz sind als unerwünschte Oberflächenwelligkeit im bearbeiteten Werkstück deutlich sichtbar.

Besonders negativ wirkt sich bei der Bildung solcher Resonanzschwingungen eine negative Phasendrehung aus, wie sie insbesondere durch die Verzögerungen der Regelstrecke im Zusammenwirken mit dem Integralteil des Drehzahlreglers entsteht. Durch Reduzierung des entsprechenden Verstärkungsfaktors lässt sich der Integralanteil verringern und damit die Resonanzschwingung abschwächen, gleichzeitig nehmen aber auch die Steifheit der Werkzeugmaschine und die Qualität der Störausregelung ab.

In der EP 1439437 B1 ist daher eine Reglerstruktur zum Positionieren einer Last mittels eines elektrischen Motors beschrieben, die eine Einrichtung zur aktiven Dämpfung unerwünschter niederfrequenter Schwingungen aufweist. Die Reglerstruktur weist einen Lageregler, einen Geschwindigkeitsregler, und einen Stromregler auf. Im Regelkreis werden außerdem Dämpfungssignale gebildet, die unerwünschten niederfrequenten Schwingungen entgegen wirken. Gemäß dem Ausführungsbeispiel der Figur 3 der EP 1439437 B1 werden aus einem einzigen Sensorsignal, das die störende Schwingung enthält, ein erstes und ein zweites Dämpfungssignal unterschiedlicher Phasenlage gebildet und zwischen Lage- und Geschwindigkeitsregler aufgeschaltet, um so die störenden Schwingungen aktiv zu dämpfen. Da die Dämpfungssignale gemäß diesem Stand der Technik aus den im Regelkreis vorliegenden Signalen gewonnen werden, lassen sich externe Sensoren, die z.B. Schwingungen in der Nähe des Werkzeugs erfassen, nicht einsetzen.

Aus der US 6515442 B1 ist eine Reglerstruktur bekannt, bei der ein aus zwei Sensorsignalen gebildetes Dämpfungssignal zwischen dem Geschwindigkeitsregler und den Stromregler aufgeschaltet ist. Bei den Sensoren handelt es sich um Positionsmessgeräte, die sowohl die Position des Motors als auch die Position des bewegten Elements feststellen können, und damit auch die gegenseitige Verdrehung dieser Elemente, die zu einem rückstellenden Drehmoment und damit zu störenden Schwingungen führen kann. Der Aufwand für die Gewinnung eines Dämpfungssignals ist hier allerdings hoch.

Aufgabe der Erfindung ist es, eine Reglerstruktur zum Positionieren einer Last zu schaffen, die störende Schwingungen noch effektiver dämpft, und dabei an unterschiedlichste Anwendungsfälle anpassbar ist.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird eine Reglerstruktur zum Positionieren einer Last mittels eines elektrischen Motors angegeben, die eine Einrichtung zur aktiven Dämpfung unerwünschter niederfrequenter Schwingungen aufweist. Die Reglerstruktur weist einen Lageregler auf, dem eine Abweichung einer Ist-Lage der Last von einer Soll-Lage zugeführt ist, und der eine Soll-Geschwindigkeit abgibt. Die Reglerstruktur weist außerdem einen Geschwindigkeitsregler auf, dem eine Abweichung einer Ist-Geschwindigkeit der Last von der Soll-Geschwindigkeit zugeführt ist, und der einen Soll-Strom abgibt, sowie einen Stromregler, dem eine Abweichung eines Ist-Stromes des Motors vom Soll-Strom zugeführt ist, und der eine Soll-Spannung zum Betreiben des Motors abgibt. Lageregler, Geschwindigkeitsregler und Stromregler bilden zusammen einen kaskadierten Regelkreis.

Dem Regelkreis sind Dämpfungssignale aufgeschaltet, die unerwünschten niederfrequenten Schwingungen entgegen wirken, wobei wenigstens ein erstes und ein zweites Dämpfungssignal unterschiedlicher Phasenlage aus einem einzigen Sensorsignal abgeleitet sind, und wobei das erste Dämpfungssignal zwischen Lageregler und Geschwindigkeitsregler aufgeschaltet ist, und das zweite Dämpfungssignal zwischen Geschwindigkeitsregler und Stromregler aufgeschaltet ist.

Die hier vorgestellte Reglerstruktur benötigt nur ein einziges Sensorsignal, das die zu dämpfende Schwingung enthält, und ist damit nicht auf Anwendungsfälle beschränkt, in denen mehrere Sensoren zum Einsatz kommen. So kann ein einziger Lagesensor am Motor oder an der bewegten Last genügen. Die Parametrierung der Einrichtung zur aktiven Dämpfung gelingt vergleichsweise leicht, da sich die einzelnen Parameter nur geringfügig gegenseitig beeinflussen. Auch ist die Reglerstruktur robust gegen Veränderungen wie beispielsweise veränderte Massen, die die Frequenz der störenden Resonanz verschieben können.

Da sich auch Beschleunigungssensoren als Quelle für ein Sensorsignal zum Ableiten der Dämpfungssignale eignen, können Schwingungen direkt oder nahe am interessierenden Ort erfasst und damit gedämpft werden, also etwa am Werkzeugmittelpunkt einer Werkzeugmaschine, bei der Schwingungen vermieden werden sollen. Solche Beschleunigungssensoren lassen sich nämlich im Gegensatz zu Positionsmessgeräten relativ einfach nahe an solchen Orten anbringen.

Mit der hier vorgestellten Einrichtung zur Schwingungsdämpfung konnten sehr erfolgreich Torsionsschwingungen zwischen Antrieb und Last gedämpft werden, aber auch Aufstellschwingungen einer Werkzeugmaschine, sowie Schwingungen des Werkzeugmittelpunktes. Die Einrichtung zur Schwingungsdämpfung ist damit sehr breit anwendbar.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: ein erstes einfaches Ausführungsbeispiel,
- Figur 2: ein zweites Ausführungsbeispiel mit zusätzlichen Möglichkeiten zur Parametrierung,
- Figur 3: ein drittes Ausführungsbeispiel mit einem Beschleunigungssensor, von dem die Dämpfungssignale abgeleitet werden.

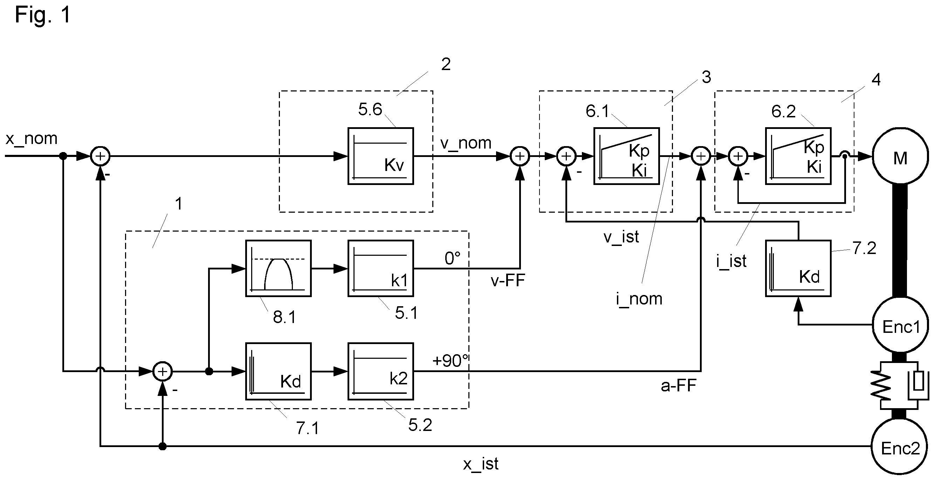

In der Figur 1 ist zunächst eine herkömmliche Reglerstruktur mit einem Lageregler 2, einem Geschwindigkeitsregler 3 und einem Stromregler 4 gezeigt, denen jeweils Sollwerte x_nom, v_nom, i_nom vorgegeben werden. Die Soll-Lage x_nom wird zum Beispiel durch eine übergeordnete Numerische Steuerung bereit gestellt.

Aus der Differenz der Soll-Lage x_nom und der Ist-Lage x_ist wird im Lageregler 2 über ein Proportionalglied (P-Glied) 5.6 die Soll-Geschwindigkeit v_nom bestimmt. Das P-Glied 5.6 ist ein einfacher Verstärker, dessen Verstärkungsfaktor Kv parametrierbar ist.

Aus der Differenz der Soll-Geschwindigkeit v_nom und der Ist-Geschwindigkeit v_ist wird im Geschwindigkeitsregler 3 über ein Proportional-Integral-Glied (PI-Glied) 6.1 der Strom-Sollwert i_nom bestimmt. Das PI-Glied enthält in üblicher Weise einen Verstärker und einen Integrator, die parallel zueinander das Eingangssignal verstärken und zeitlich integrieren, wobei die jeweiligen Anteile über Verstärkungsfaktoren Kp und Ki parametrierbar sind.

Aus der Differenz des Soll-Stromes i_nom und des Ist-Stromes i_ist werden im Stromregler 4 über ein weiteres PI-Glied Soll-Spannungen ermittelt, anhand derer ein nicht dargestellter Leistungsverstärker den elektrischen Motor M antreibt.

Die Lage des Motors M wird dabei mit einem Drehgeber Enc1 ermittelt. Das Lagesignal des Drehgebers Enc1 wird in einem Differenzierer (D-Glied) 7.2 zeitlich abgeleitet und als Ist-Geschwindigkeit v_ist dem Regelkreis zugeführt.

Da die nicht dargestellte Last nicht starr mit dem Motor M verbunden ist, wird die Position der Last mit einem separaten Lagemessgerät Enc2 direkt gemessen. Das Lagesignal dieses Lagemessgerätes Enc2 ist dem Regelkreis als Ist-Lage x_ist zugeführt.

Insbesondere die nicht starre Verbindung zwischen Motor und Last, die in der Figur 1 mit einem Feder- / Dämpfungssymbol angedeutet ist, führt zu unerwünschten Schwingungen im Gesamtsystem, insbesondere wenn durch den zeitlichen Verlauf der Soll-Lage x_nom Resonanzen im Gesamtsystem angeregt werden.

Bei der Parametrierung einer solchen Reglerstruktur muss man daher abwägen, ob der Regler dank großer Verstärkungsfaktoren Kv, Kp, Ki besonders schnell auf Abweichungen reagieren soll, wobei das System in diesem Fall vermehrt zu Schwingungen neigt, oder ob eher niedrige Verstärkungsfaktoren Kv, Kp, Ki die Anregung von Schwingungen vermeiden sollen, wobei das System Abweichungen dann nur langsam ausregelt und damit weiter von der vorgegeben Soll-Lage x_nom abweicht.

Gemäß der vorliegenden Erfindung soll eine Einrichtung 1 dabei helfen, unerwünschte Schwingungen aktiv zu dämpfen, und so die Vorteile hoher Verstärkungsfaktoren Kv, Kp, Ki mit einer dennoch geringen Neigung zu unerwünschten Schwingungen kombinieren zu können.

Hierzu werden in der Einrichtung 1 Dämpfungssignale v-FF und a-FF zur Verfügung gestellt, die auf Basis eines einzigen Sensorsignals gebildet werden. In diesem Ausführungsbeispiel wird als einziges Sensorsignal die Ist-Lage x_ist herangezogen. Dieses Sensorsignal enthält jede unerwünschte Schwingung der Last. Alternativ würden sich auch andere Sensorsignale eigenen, hier zum Beispiel die Lage des Motors M, oder der Ist-Strom i_ist des Motors.

In der Einrichtung 1 wird wie im Lageregler 2 zunächst die Differenz aus der Soll-Lage x_nom und der Ist-Lage x_ist gebildet, um die unerwünschten Schwingungen von der erwünschten Bewegung der Last zu trennen.

In einem ersten Zweig zur Bildung des ersten Dämpfungssignals v-FF wird diese Differenz mittels eines ersten P-Glieds 5.1 verstärkt, wobei der Verstärkungsfaktor k1 des P-Glieds 5.1 parametrierbar ist.

Bevorzugt durchläuft das Signal zur Bildung des ersten Dämpfungssignals v-FF auch ein Bandpassfilter 8.1, das auf die zu dämpfende Schwingungsfrequenz eingestellt ist. Solche störenden Resonanzfrequenzen liegen typischerweise im Bereich zwischen 10 und 50 Hertz. Ein wichtiger Effekt des Bandpassfilters 8.1 ist dabei, dass die Einrichtung für sehr niedrige Frequenzen (z.B. kleiner als 5 Hertz) keine Auswirkungen auf den Regelkreis mehr hat. Anstelle des Bandpassfilters 8.1 könnte auch ein Hochpass zum Einsatz kommen, der die niedrigen Frequenzen abschneidet.

In einem zweiten Zweig zur Bildung des zweiten Dämpfungssignals a-FF wird die Differenz aus Soll- und Ist-Lage in einem D-Glied 7.1, das wiederum durch einen Verstärkungsfaktor Kd parametrierbar ist, zeitlich abgeleitet. Außerdem durchläuft das Signal zur Bildung des zweiten Dämpfungssignals a-FF ein zweites Proportionalglied 5.2, wobei der Verstärkungsfaktor k2 des zweiten P-Glieds 5.2 parametrierbar ist. Das zweite Dämpfungssignal a-FF wird zwischen dem Geschwindigkeitsregler 3 und dem Stromregler 4 additiv aufgeschaltet.

Durch die phasenschiebende Wirkung des D-Glieds 7.1 im zweiten Zweig weisen das erste und zweite Dämpfungssignal v-FF bzw. a-FF unterschiedliche Phasenlagen auf. Wegen der zeitlichen Ableitung im D-Glied 7.1 eilt die Phase der störenden Schwingung um etwa 90 Grad gegenüber der durch die Differenzbildung zwischen Soll-Lage x_nom und Ist-Lage x_ist erhaltenen Schwingung voraus. Anders ausgedrückt eilt das zweite Dämpfungssignal a-FF dem ersten Dämpfungssignal v-FF um 90 Grad voraus.

Dieses um 90 Grad der störenden Schwingung vorauseilende zweite Dämpfungssignal a-FF wird additiv nach dem Geschwindigkeitsregler 3 aufgeschaltet. Wegen der phasenschiebenden Wirkung des Integrators im Geschwindigkeitsregler 3, der die Phase nicht um +90 Grad verschiebt wie ein D-Glied, sondern idealer Weise um -90 Grad, tritt am Aufschaltpunkt des zweiten Dämpfungssignals eine Auslöschung der störenden Schwingung auf.

Eine weitere wichtige Wirkung des D-Glieds 7.1 beruht darauf, dass niedrige Frequenzen eher gedämpft und hohe Frequenzen verstärkt werden. Die schon im Zusammenhang mit dem Bandpassfilter 8.1 erwähnte Forderung, dass sich die Einrichtung 1 für kleine Frequenzen nicht auf den Regelkreis auswirken soll, wird also im zweiten Zweig durch den Frequenzgang des D-Gliedes 7.1 erfüllt.

Es sei angemerkt, dass die phasenschiebende Wirkung des Integrators im Geschwindigkeitsregler 3 hier idealisiert mit -90 Grad angenommen wird. Tatsächlich bewirkt selbst ein gut abgeglichener Geschwindigkeitsregler 3 lediglich eine Phasenschiebung um -85 Grad, ein schlecht abgeglichener Geschwindigkeitsregler kann z.B. auch eine Phasenschiebung von nur -45 Grad bewirken. Im folgenden Ausführungsbeispiel werden daher zusätzliche Maßnahmen offenbart, mit denen dennoch eine gute Dämpfung störender Schwingungen erreicht werden kann, indem die Einrichtung an die realen Verhältnisse anpassbar ist.

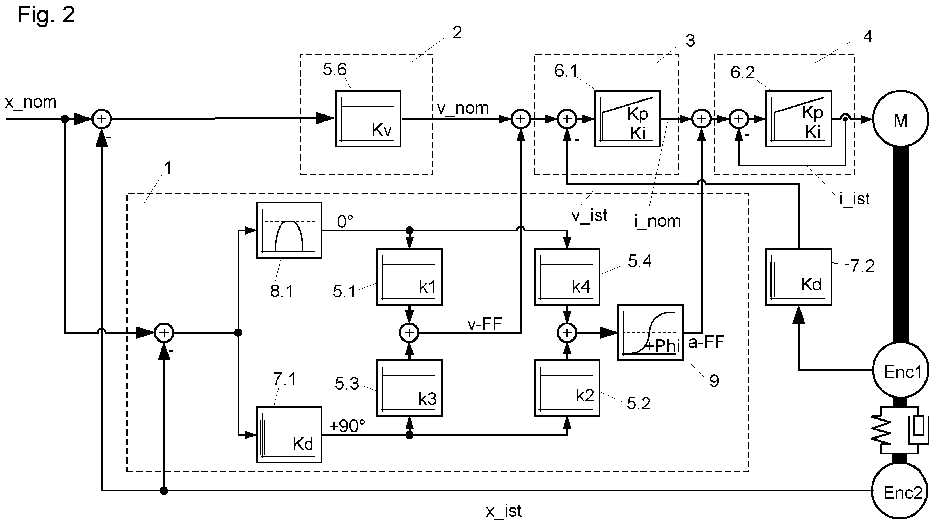

In der Figur 2 findet man alle Elemente der Reglerstruktur aus Figur 1 wieder. Diese Elemente sind mit identischen Bezugszeichen versehen und hier nicht erneut beschrieben, denn ihre Funktion ist unverändert. Die Reglerstruktur dieses zweiten Ausführungsbeispiels ist jedoch um einige Elemente erweitert.

So durchläuft das zweite Dämpfungssignal a-FF vor der Aufschaltung zwischen Geschwindigkeitsregler 3 und Stromregler 4 einen Phasenschieber 9 mit einer parametrierbaren Phasenverschiebung +Phi. Beispielsweise wurde ein Differentialelement mit Verzögerung erster Ordnung (DT1 - Glied) erfolgreich als Phasenschieber 9 eingesetzt. So ist es möglich, die Phasenlage des zweiten Aufschaltsignals a-FF optimal an die im Wesentlichen durch den Integrator im Geschwindigkeitsregler 3 bestimmte Phasenlage der am Ausgang des Geschwindigkeitsreglers vorhandenen störenden Schwingung anzupassen und eine bestmögliche Auslöschung bzw. Dämpfung zu erreichen.

In der Figur 2 erkennt man außerdem ein über einen dritten Verstärkungsfaktor k3 parametrierbares drittes P-Glied 5.3, über das ein nach dem D-Glied 7.1 abgegriffener Anteil des zweiten Dämpfungssignals a-FF zum Ausgang des ersten P-Gliedes 5.1 addiert ist. Auf diese Weise lässt sich dem ersten Dämpfungssignal v-FF ein parametrierbarer Anteil des zweiten Dämpfungssignals a-FF beimischen. Man erhält so einen zusätzlichen Freiheitsgrad bei der Parametrierung der gesamten Reglerstruktur.

Ebenso erkannt man in der Figur 2 ein über einen vierten Verstärkungsfaktor k4 parametrierbares viertes P-Glied 5.4, über das ein nach dem Bandpassfilter 8.1 abgegriffener Anteil des ersten Dämpfungssignals v-FF zum Ausgang des zweiten P-Gliedes 5.2 addiert ist. Auf diese Weise lässt sich dem zweiten Dämpfungssignal a-FF ein parametrierbarer Anteil des ersten Dämpfungssignals v-FF beimischen. Auch hierdurch erhält man zusätzliche Freiheitsgrade bei der Parametrierung der Reglerstruktur.

Wählt man im zweiten Ausführungsbeispiel die Phasenverschiebung des Phasenschiebers 9 Phi = 0 und die Verstärkungsfaktoren des dritten und vierten P-Glieds k3 = 0 und k4 = 0, so erhält man das erste Ausführungsbeispiel der Figur 1, denn die Elemente, um die das erste Ausführungsbeispiel erweitert wurde, sind dann unwirksam.

Wählt man nur einen oder zwei der drei Parameter +Phi, k3 oder k4 verschieden von Null, so ergeben sich weitere Ausführungsbeispiele, bei denen von den drei zusätzlichen Elementen Phasenschieber 9 bzw. drittes und viertes P-Glied 5.3, 5.4 nur jeweils die vorhanden sind, deren Parameter verschieden von Null ist. Diese Ausführungsbeispiele sind hier nicht gesondert in Figuren dargestellt.

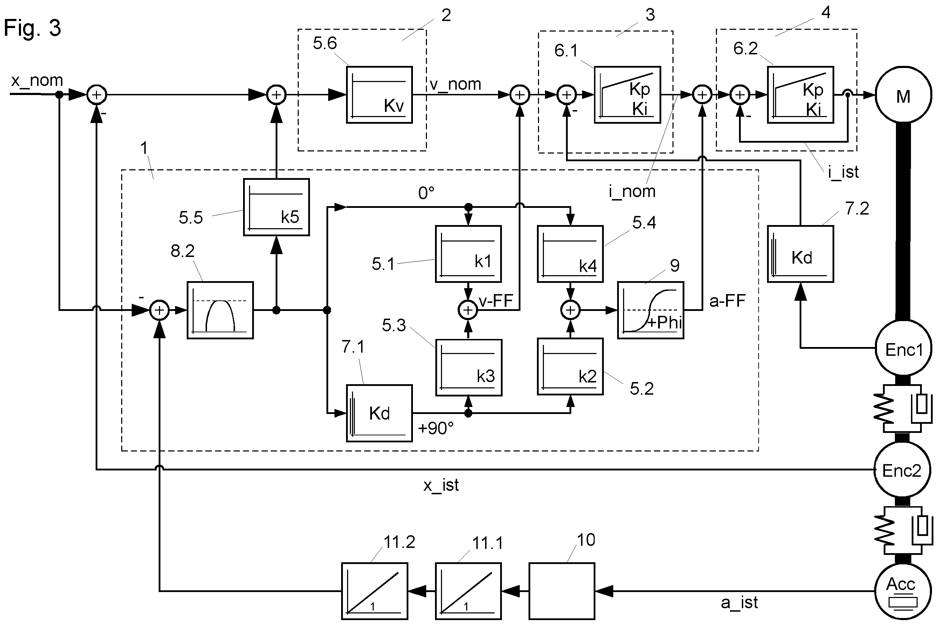

Ein drittes Ausführungsbeispiel zeigt die Figur 3. Hier dient ein Beschleunigungssensor Acc als Quelle für das Sensorsignal, aus dem die Einrichtung 1 die Dämpfungssignale v-FF, a-FF und hier zusätzlich x-FF bildet. Die vom Beschleunigungssensor Acc ermittelte Beschleunigung a_ist der Last wird nach der Entfernung des Gleichanteils mittels eines Filters 10 in zwei Integrator-Gliedern 11.1, 11.2 zweifach integriert, um so auf eine Lageänderung schließen zu können.

Der Gleichanteil des durch zweifache Integration gebildeten Positionswertes ist zwar undefiniert, da hier aber nur störende Schwingungen interessieren, kann dieser Gleichanteil herausgefiltert werden. Dies geschieht im vorliegenden Ausführungsbeispiel, indem die Differenz aus der Soll-Lage x_nom und der zweifach integrierten Beschleunigung a_ist zunächst durch ein Bandpassfilter 8.2 geleitet wird, bevor das so vom Gleichanteil befreite Signal aufgeteilt wird in drei Zweige zur Bildung der einzelnen Dämpfungssignale v-FF, a-FF und x-FF.

Die Maßnahme, das Bandpassfilter 8.2 schon vor der Aufteilung in die verschiedenen Zweige anzuordnen (und nicht wie in den Figuren 1 und 2 im ersten Zweig) hat außerdem den Vorzug, dass im D-Glied 7.1 des zweiten Zweiges keine sehr hohen Frequenzen ankommen. Das Rauschen dieses D-Gliedes wird somit verringert.

Der erste Zweig bildet wieder das erste Dämpfungssignal v-FF und entspricht im Wesentlichen dem ersten Zweig des vorherigen Ausführungsbeispiels. Lediglich das Bandpassfilter 8.1 fehlt in diesem Zweig, denn das Signal zur Bildung des ersten Dämpfungssignals v-FF ist ja bereits durch das Bandpassfilter 8.2 gelaufen.

Der zweite Zweig zur Bildung des zweiten Dämpfungssignals a-FF entspricht vollständig dem zweiten Zweig des vorherigen Ausführungsbeispiels.

In Figur 3 erkennt man, dass vom Ausgang des zweiten Bandpassfilters 8.2 ein dritter Zweig zur Bildung eines dritten Dämpfungssignal x-FF abzweigt, das über ein fünftes Proportionalglied 5.5 mit einem parametrierbaren Verstärkungsfaktor k5 dem Eingang des Lagereglers 2 aufgeschaltet ist. Die Aufschaltung des dritten Dämpfungssignals x-FF verhindert, dass der Lageregler 2 dem Dämpfungseffekt, der durch die Aufschaltung der Dämpfungssignale v-FF und a-FF erreicht wird, entgegenwirkt.

Die Reglerstrukturen der vorangegangen Ausführungsbeispiele wurden in einer allgemeinen, in der Regelungstechnik üblichen Darstellungsweise offenbart. Sie können auf unterschiedliche Arten implementiert werden. Dabei kann grob unterschieden werden zwischen analogen Regelkreisen, die beispielsweise mit Hilfe von Operationsverstärkern aufgebaut sind, und einer digitalen Implementierung, bei der eine Reglerstruktur in Software abgebildet wird. Ein Fachmann auf dem Gebiet der Regelungstechnik wird die für seine Anwendung beste Möglichkeit zur Implementierung leicht auswählen und die Lehre der vorliegenden Erfindung umsetzen können.

## Patentansprüche

1. Reglerstruktur zum Positionieren einer Last mittels eines elektrischen Motors (M), mit einer Einrichtung (1) zur aktiven Dämpfung unerwünschter niederfrequenter Schwingungen,
- mit einem Lageregler (2), dem eine Abweichung einer Ist-Lage (x_ist) der Last von einer Soll-Lage (x_nom) zugeführt ist, und der eine Soll-Geschwindigkeit (v_nom) abgibt,
- mit einem Geschwindigkeitsregler (3), dem eine Abweichung einer Ist-Geschwindigkeit (v_ist) der Last von der Soll-Geschwindigkeit (v_nom) zugeführt ist, und der einen Soll-Strom (i_nom) abgibt,
- sowie mit einem Stromregler (4), dem eine Abweichung eines Ist-Stromes (i_ist) des Motors (M) vom Soll-Strom (i_nom) zugeführt ist, und der eine Soll-Spannung zum Betreiben des Motors (M) abgibt,
- wobei im Regelkreis Dämpfungssignale (v-FF, a-FF) aufgeschaltet sind, die unerwünschten niederfrequenten Schwingungen entgegen wirken,
**dadurch gekennzeichnet dass**
- wenigstens ein erstes und ein zweites Dämpfungssignal (v-FF, a-FF) unterschiedlicher Phasenlage aus einem einzigen Sensorsignal (x_ist, a_ist) abgeleitet sind,
- dass das erste Dämpfungssignal (v-FF) zwischen Lageregler (2) und Geschwindigkeitsregler (3) aufgeschaltet ist, und dass das zweite Dämpfungssignal (a-FF) zwischen Geschwindigkeitsregler (3) und Stromregler (4) aufgeschaltet ist.

2. Reglerstruktur nach Anspruch 1, **dadurch gekennzeichnet, dass** das Sensorsignal ein der Ist-Lage (x_ist) der bewegten Last proportionaler Wert ist, und dass dieser Wert von der Soll-Lage (x_nom) abgezogen wird, um aus dieser Differenz die Dämpfungssignale (v-FF, a-FF) zu bilden.

3. Reglerstruktur nach Anspruch 1, **dadurch gekennzeichnet, dass** das Sensorsignal ein der Beschleunigung (a_ist) der bewegten Last proportionaler Wert ist.

4. Reglerstruktur nach Anspruch 3, **dadurch gekennzeichnet, dass** das Sensorsignal (a_ist) zwei Integrator-Glieder (11.1, 11.2) durchläuft und dann von der Soll-Lage (x_nom) abgezogen wird, um aus dieser Differenz die Dämpfungssignale (v-FF, a-FF) zu bilden.

5. Regelstruktur nach Anspruch 2 oder 4, **dadurch gekennzeichnet, dass** zur Bildung des ersten Dämpfungssignals (v-FF) die Differenz zumindest ein erstes Proportionalglied (5.1) mit einem ersten parametrierbaren Verstärkungsfaktor (k1) durchläuft.

6. Reglerstruktur nach Anspruch 5, **dadurch gekennzeichnet, dass** das erste Dämpfungssignal (v-FF) außerdem ein Bandpassfilter (8.1) durchläuft, das auf die zu dämpfende Schwingungsfrequenz eingestellt ist.

7. Reglerstruktur nach Anspruch 2 oder 4, **dadurch gekennzeichnet, dass** zur Bildung des zweiten Dämpfungssignals (a-FF) die Differenz ein Differenzierglied (7.1) und ein zweites Proportionalglied (5.2) mit einem zweiten parametrierbaren Verstärkungsfaktor (K2) durchläuft.

8. Reglerstruktur nach Anspruch 5 und 7, **dadurch gekennzeichnet, dass** zur Bildung des ersten Dämpfungssignals (v-FF) ein nach dem Differenzierglied (7) abgegriffener Anteil des zweiten Dämpfungssignals (a-FF) über ein drittes Proportionalglied (5.3) mit einem dritten parametrierbaren Verstärkungsfaktor (k3) zum Ausgang des ersten Proportionalglieds (5.1) addiert ist.

9. Reglerstruktur nach Anspruch 5 und 7, **dadurch gekennzeichnet, dass** zur Bildung des zweiten Dämpfungssignals (a-FF) ein vor dem ersten Proportionalglied (5.1) abgegriffener Anteil des ersten Dämpfungssignals (v-FF) über ein viertes Proportionalglied (5.4) mit einem vierten parametrierbaren Verstärkungsfaktor (k4) zum Ausgang des zweiten Proportionalglieds (5.2) addiert ist.

10. Reglerstruktur nach einem der vorhergehenden Ansprüche, **dadurch gekennzeichnet, dass** das zweite Dämpfungssignal (a-FF) vor der Aufschaltung zwischen Geschwindigkeitsregler (3) und Stromregler (4) einen Phasenschieber (9) mit einer parametrierbaren Phasenverschiebung (+Phi) durchläuft.

11. Reglerstruktur nach Anspruch 2 oder 4, **dadurch gekennzeichnet, dass** die Differenz zunächst ein zweites Bandpassfilter (8.2) durchläuft, von dessen Ausgangssignal die Dämpfungssignale (v-FF, a-FF, x-FF) abgeleitet werden.

12. Reglerstruktur nach Anspruch 11, **dadurch gekennzeichnet, dass** vom Ausgang des zweiten Bandpassfilters (8.2) ein drittes Dämpfungssignal (x-FF) abgezweigt ist, das über ein fünftes Proportionalglied (5.5) mit einem parametrierbaren Verstärkungsfaktor (k5) dem Eingang des Lagereglers (2) aufgeschaltet ist.

## Claims

1. Controller structure for positioning a load by means of an electric motor (M), comprising a device (1) for actively damping undesired low-frequency vibrations,
- with a position controller (2), to which a deviation of an actual position (x_act) of the load from a setpoint position (x_nom) is fed, and which outputs a setpoint speed (v_nom),
- with a speed controller (3), to which a deviation of an actual speed (v_act) of the load from the setpoint speed (v_nom) is fed, and which outputs a setpoint current (i_nom),
- and with a current controller (4), to which a deviation of an actual current (i_act) of the motor (M) from the setpoint current (i_nom) is fed, and which outputs a setpoint voltage for operating the motor (M),
- wherein damping signals (v-FF, a-FF) that counteract undesired low-frequency vibrations are injected in the control loop,
**characterized in that**
- at least a first and a second damping signal (v-FF, a-FF) of different phase angles are derived from a single sensor signal (x_act, a_act),
- **in that** the first damping signal (v-FF) is injected between the position controller (2) and the speed controller (3), and **in that** the second damping signal (a-FF) is injected between the speed controller (3) and the current controller (4) .

2. Controller structure according to Claim 1, **characterized in that** the sensor signal is a value proportional to the actual position (x_act) of the moved load, and **in that** this value is subtracted from the setpoint position (x_nom) to form the damping signals (v-FF, a-FF) from this difference.

3. Controller structure according to Claim 1, **characterized in that** the sensor signal is a value proportional to the acceleration (a_act) of the moved load.

4. Controller structure according to Claim 3, **characterized in that** the sensor signal (a_act) passes through two integrator elements (11.1,11.2) and is then subtracted from the setpoint position (x_nom) to form the damping signals (v-FF, a-FF) from this difference.

5. Controller structure according to Claim 2 or 4, **characterized in that**, to form the first damping signal (v-FF), the difference passes through at least a first proportional element (5.1) with a first parameterizable gain factor (k1).

6. Controller structure according to Claim 5, **characterized in that** the first damping signal (v-FF) also passes through a bandpass filter (8.1) that is set to the vibration frequency to be damped.

7. Controller structure according to Claim 2 or 4, **characterized in that**, to form the second damping signal (a-FF), the difference passes through a differentiating element (7.1) and a second proportional element (5.2) with a second parameterizable gain factor (K2).

8. Controller structure according to Claims 5 and 7, **characterized in that**, to form the first damping signal. (v-FF), a component of the second damping signal (a-FF) that is picked off downstream of the differentiating element (7) is added to the output of the first proportional element (5.1) via a third proportional element (5.3) with a third parameterizable gain factor (k3).

9. Controller structure according to Claims 5 and 7, **characterized in that**, to form the second damping signal (a-FF), a component of the first damping signal (v-FF) that is picked off upstream of the first proportional element (5.1) is added to the output of the second proportional element (5.2) via a fourth proportional element (5.4) with a fourth parameterizable gain factor (k4).

10. Controller structure according to one of the preceding claims, **characterized in that**, before the injection between the speed controller (3) and the current controller (4), the second damping signal (a-FF) passes through a phase shifter (9) with a parameterizable phase shift (+Phi).

11. Controller structure according to Claim 2 or 4, **characterized in that** the difference first passes through a second bandpass filter (8.2), from the output signal of which the damping signals (v-FF, a-FF, x-FF) are derived.

12. Controller structure according to Claim 11, **characterized in that** a third damping signal (x-FF), which is injected to the input of the position controller (2) via a fifth proportional element (5.5) with a parameterizable gain factor (k5), is branched off from the output of the second bandpass filter (8.2).

## Revendications

1. Structure de régulateur destinée à positionner une charge au moyen d'un moteur électrique (M), comprenant un dispositif (1) destiné à l'amortissement actif d'oscillations à basse fréquence indésirables,
- comprenant un régulateur de charge (2) auquel est acheminé un écart entre une position réelle (x_ist) de la charge et une position de consigne (x_nom) et qui délivre une vitesse de consigne (v_nom),
- comprenant un régulateur de vitesse (3) auquel est acheminé un écart entre une vitesse réelle (v_ist) de la charge et la vitesse de consigne (v_nom) et qui délivre un courant de consigne (i_nom),
- et comprenant aussi un régulateur de courant (4) auquel est acheminé un écart entre un courant réel (i_ist) de la charge du moteur (M) et le courant de consigne (i_nom) et qui délivre une tension de consigne servant à faire fonctionner le moteur (M),
- des signaux d'amortissement (v-FF, a-FF) qui s'opposent aux oscillations à basse fréquence indésirables étant appliqués dans le circuit de régulation,
**caractérisée en ce que**
- au moins un premier et un deuxième signal d'amortissement (v-FF, a-FF) ayant des phases différentes sont dérivés d'un signal de capteur (x_ist, a_ist) unique,
- **en ce que** le premier signal d'amortissement (v-FF) est appliqué entre le régulateur de charge (2) et le régulateur de vitesse (3), et **en ce que** le deuxième signal d'amortissement (a-FF) est appliqué entre le régulateur de vitesse (3) et le régulateur de courant (4) .

2. Structure de régulateur selon la revendication 1, **caractérisée en ce que** le signal de capteur est une valeur proportionnelle à la position réelle (x_ist) de la charge en mouvement, et **en ce que** cette valeur est déduite de la position de consigne (x_nom) afin de former les signaux d'amortissement (v-FF, a-FF) à partir de cette différence.

3. Structure de régulateur selon la revendication 1, **caractérisée en ce que** le signal de capteur est une valeur proportionnelle à l'accélération (a_ist) de la charge en mouvement.

4. Structure de régulateur selon la revendication 3, **caractérisée en ce que** le signal de capteur (a_ist) passe à travers deux intégrateurs (11.1, 11.2) et il est ensuite déduit de la position de consigne (x_nom) afin de former les signaux d'amortissement (v-FF, a-FF) à partir de cette différence.

5. Structure de régulateur selon la revendication 2 ou 4, **caractérisée en ce que** pour former le premier signal d'amortissement (v-FF), la différence traverse au moins un premier élément proportionnel (5.1) ayant un premier facteur d'amplification (k1) paramétrable.

6. Structure de régulateur selon la revendication 5, **caractérisée en ce que** le premier signal d'amortissement (v-FF) traverse en outre un filtre passe-bande (8.1) qui est réglé sur la fréquence d'oscillation à amortir.

7. Structure de régulateur selon la revendication 2 ou 4, **caractérisée en ce que** pour former le deuxième signal d'amortissement (a-FF), la différence traverse un élément différentiel (7.1) et un deuxième élément proportionnel (5.2) ayant un deuxième facteur d'amplification (K2) paramétrable.

8. Structure de régulateur selon les revendications 5 et 7, **caractérisée en ce que** pour former le premier signal d'amortissement (v-FF), une part du deuxième signal d'amortissement (a-FF) interceptée après l'élément différentiel (7) est ajoutée à la sortie du premier élément proportionnel (5.1) par le biais d'un troisième élément proportionnel (5.3) ayant un troisième facteur d'amplification (k3) paramétrable.

9. Structure de régulateur selon les revendications 5 et 7, **caractérisée en ce que** pour former le deuxième signal d'amortissement (a-FF), une part du premier signal d'amortissement (v-FF) interceptée avant le premier élément proportionnel (5.1) est ajoutée à la sortie du deuxième élément proportionnel (5.2) par le biais d'un quatrième élément proportionnel (5.4) ayant un quatrième facteur d'amplification (k4) paramétrable.

10. Structure de régulateur selon l'une des revendications précédentes, **caractérisée en ce que** le deuxième signal d'amortissement (a-FF), avant l'application entre le régulateur de vitesse (3) et le régulateur de courant (4), traverse un déphaseur (9) ayant un déphasage (+Phi) paramétrable.

11. Structure de régulateur selon la revendication 2 ou 4, **caractérisée en ce que** la différence traverse tout d'abord un deuxième filtre passe-bande (8.2), du signal de sortie duquel sont dérivés les signaux d'amortissement (v-FF, a-FF, x-FF).

12. Structure de régulateur selon la revendication 11, **caractérisée en ce qu'**un troisième signal d'amortissement (x-FF) est séparé de la sortie du deuxième filtre passe-bande (8.2), lequel est appliqué à l'entrée du régulateur de charge (2) par le biais d'un cinquième élément proportionnel (5.5) ayant un facteur d'amplification (k5) paramétrable.
